# EUROPEAN PATENT APPLICATION

(11) **EP 1 640 642 A1**
(43) Date of publication of application: **29.03.2006**
(21) Application number: 05388051.4
(22) Date of filing: 21.06.2005
(51) Int. Cl.: F16J 3/04, A47G 7/04, A47F 5/04, A47F 5/05

(54) **Flexible and adjustable feeding and decoration stand**

(30) Priority: 24.06.2004 DK 200400183 U
(71) Applicant: Jorgensen, Milton Winckler, 3670 Vekso (DK)
(72) Inventor: Jorgensen, Milton Winckler, 3670 Vekso (DK)

(57) **Abstract**

This device concerns a stand for birdfood,lanterns,flowerpots and likewise items, and is new by that it consists of a spear to put into the ground or a base and of flexible and adjustable bars which makes it possible to transform to a less voluminous and more suitable shape when handled, transported, packed and stored.

## Description

### Use of Invention:

This invention concerns a stand for birdfood, lanterns, flowerpots and likewise items.

The stand can be assembled, taken apart or pushed together to a minimum of volume,when not in use or when transported, packed, handled or stored.

The stand consists of a speartrunk and a number of bars/branches folding out by assembling /extension of bars from the trunk and/or by the weight of hanging items(hangers).

The end of bars are formed to make an easy and stabil suspension of the mentioned items. The stand/spear can be put in the ground/lawn or placed in a base or a flowerpot in-as well as outdoor..

### Known Tecnic:

A similar product in permanent unfolded/spread out form/shape would have an inconvenient high volume and make it difficult and costincreasing to handle,pack,transport and store.

### The Tecnical problem to be solved:

With this invention it desires to make a stand, which can be extented/unfolded to give for example the illusion of a tre and can be taken apart/pushed together to a minimum of volume, when handled, packed, transported or stored.

### The new Tecnic:

The new about the invention in its embodyment is that it contains of straight or curved flexible bars/branches to be mounted,pushed or dragged in or out of a spear.

### The Tecnical effect :

By using the above mentioned tecnic a less voluminous form can be obtained as well as it can be easily transformed into the more voluminous form/shape, where it's possible to adjust the length of the bars in relation to the weight of the hanging items.

### List of photos/drawings :

Photo 1 shows the invention made in metal with black coated spear( lenght : 120 cm & diameter: 16 mm), and bars in stainless steel (lenght : 80 cm & diameter 2mm).
Photo 2 shows the device in use with birdfeederballs.

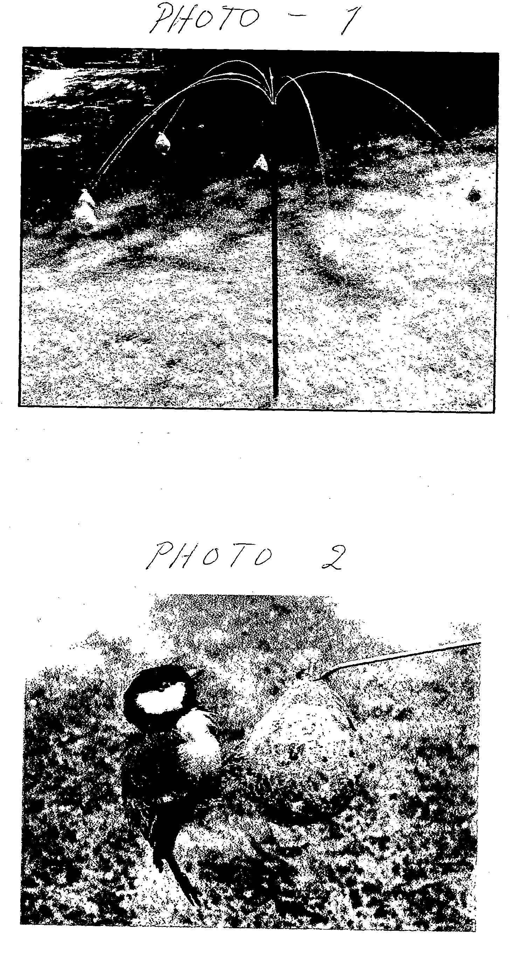

Drawing 1 shows how a stand could /would look in a permanent non flexible form.

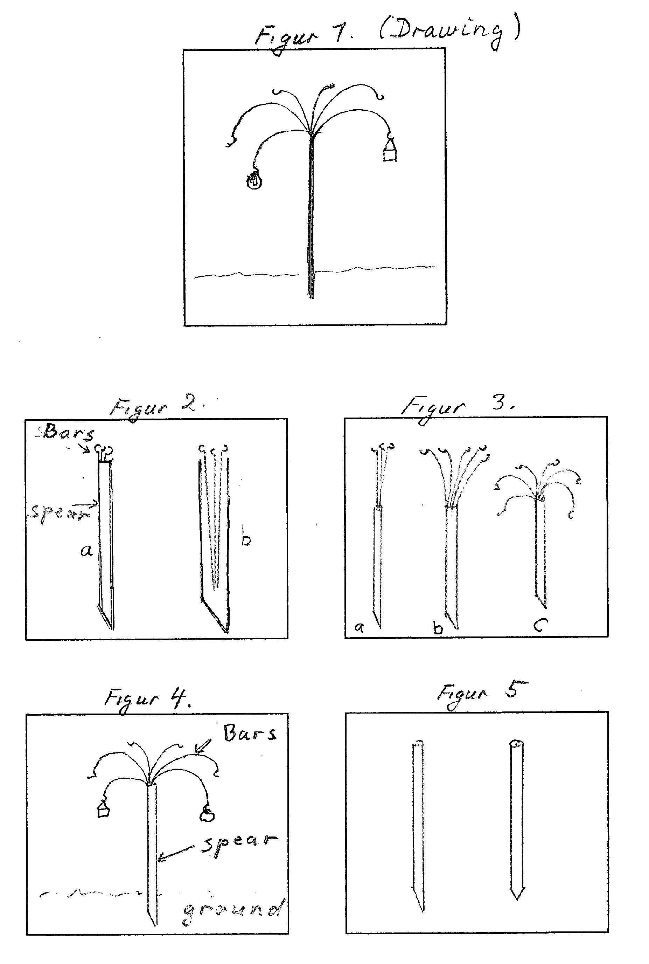

Drawing 2 shows the new stand with bars pushed into the spear a) and in cross section b)
Drawing 3 shows the new stand with bars extented from the spear.
Drawing 4 shows the new stand unfolded with hanging items.
Drawing 5 shows spears according to device.
Drawing 6 shows an embodyment of a spear with a treaddevice, making it easier to press the spear into the ground/lawn.
Drawing 7 shows spear placed in a base.

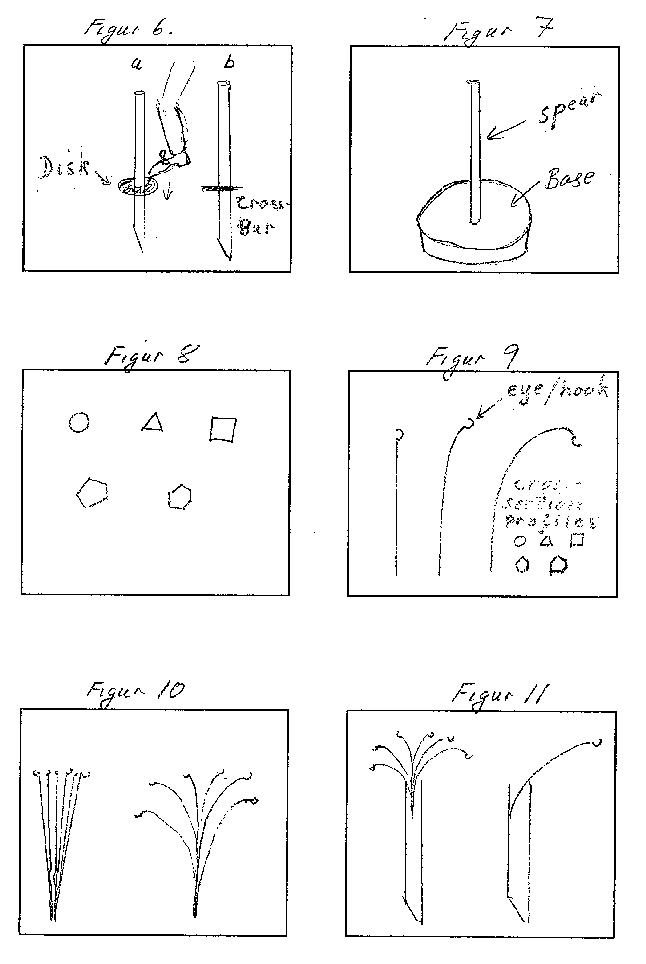

Drawing 8 shows cross section profiles of spear according to the device.
Drawing 9 shows embodyments of straight and curved bars according to the device as well as cross section profiles of bars.

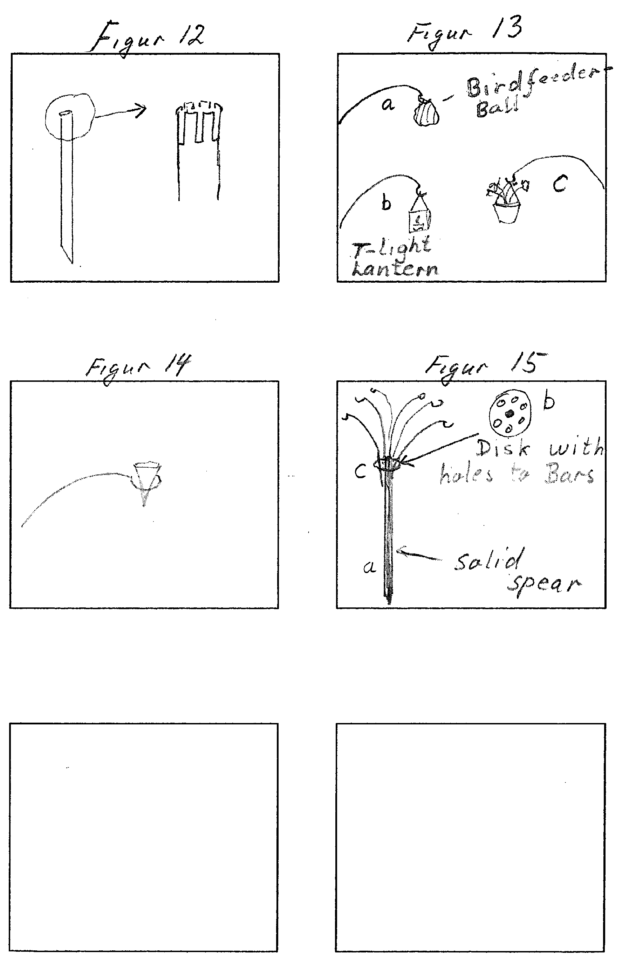

Drawing 10 shows embodyments of assembled e.g. welded bars according to the device.
Drawing 11 shows the bars individually or assembled in the spear..
Drawing 12 shows an embodyment of topend of spear with stearingtracks for bars.
Drawing 13 shows examples of hanging items on the bars.
Drawing 14 shows an embodymentexample of alternative bardesign for other hanging items.
Drawing 15 shows an example of embodyment according to the device with a solid spear and an alternative device for placing/connecting the bars.

### Embodyment examples:

In drawing 1 one can see a non flexible/partable stand,which is unsuitable voluminous for packing,transport, handlig and storage

In drawing 2 one can see the new stand/ invention in a pushfolded and less voluminous stage(a) and accordingly (b) shows a cross section of the stand.

In drawing 3 one can see embodyments of the stand with bars extended from the spear in a) straight,(b) slightly curved or (c) curved form/shape ready to hang on relevant items.

In drwing 4 one can see the new stand in an unfolded stage with hanging items, gaining the same voluminous shape as a permanent construction (drawing 1).

In drawing 5 one can see embodyments of spearpoint shapes.

In drawing 6 one can see embodyments of the spear with a treaddevice,at the lower part of the spear(a) disk (b) crossbar,making it easier to press into the ground/lawn etc.

In drawing 7 one can see the stand placed in a base of e.g. rock,steel, or wood.

In drawing 8 one can see examples of embodyments of cross section profiles of the spear.

In drawing 9 one can see the individually bars in straight more or less curved shapes and examples of embodyments of round and polygonious cross section profiles.

In drawing 10 One can see embodyments of the bars straight or curved in an assemled version(e.g. welded together).

In drawing 11 One can see how bars can be placed in the spear assembled or individually.

In drawing 12 One can see the spear in an embodyment with stearingtracks, if nescessary to keep the bars apart and evenly spread.

In drawing 13 One can see examples of hanging items(a) birdfeederball (b)T-light Lantern (c) flowerpot.

In drawing 14 One can see an embodyment example of an alternative shape of barhook or eye to make it possible to hang or connect other sorts of items.

In drawing 15 One can see an embodyment of the stand, with a solid spear(a) and an example of a mounting device(b) where bars can be connected with the spear.(c).

## Claims

1. A flexible, assemble-and adjustable stand to hang birdfood,lantern,flowerpots,similar or other items, which is new and known by consisting of a spear( which can be stuck into the ground or a base indoor as well as outdoor) and flexible straight or curved bars,which assemled or individually is mounted ,pushed in or extented from the spear for hanging the mentioned items.

2. A stand according to claim 1 known by a hollow or solid,round/piped or poligonious spear.

3. Stand according to any of the previous claims known by that it is made of metal,plastic,wood,bambus or a combination of these.

4. A stand according to any of the previous claims known by it's round or polygonious bars in from 10cm to 300 cm in lenght and with a diameter of 0,1 mm to 20 mm.

5. A stand according to any of the previous claims known by a spear with a lenght of 10 - 500 cm and a diameter of 2 - 200 mm.
